# EUROPEAN PATENT APPLICATION

(11) **EP 4 790 641 A1**
(43) Date of publication of application: **12.08.2026**
(21) Application number: 26153981.1
(22) Date of filing: 26.01.2026
(51) Int. Cl.: G06T 7/00, G06T 7/33

(54) **IMAGE INSPECTION DEVICE, IMAGE INSPECTION SYSTEM, AND IMAGE INSPECTION METHOD**

(30) Priority: 30.01.2025 JP 2025014208
(71) Applicant: NEC Corporation, 108-8001 Tokyo (JP)
(72) Inventor: INOUE, Keiko, Tokyo 108-8001 (JP)
(74) Representative: Betten & Resch

(57) **Abstract**

An image inspection device includes an image selection unit that selects a plurality of time-series consecutive images from an image sequence imaged by a camera as an image set, a correspondence estimation unit that sets a plurality of regions to each image of the image set and estimates a correspondence between the plurality of regions in each image of the image set, a feature extraction unit that extracts a feature including at least a surface normal of the plurality of regions based on the correspondence, and an abnormality detection unit that detects an abnormality of a workpiece, based on the feature of the plurality of regions.

## Description

This application is based upon and claims the benefit of priority from Japanese patent application No. 2025-014208, filed on January 30, 2025, the disclosure of which is incorporated herein in its entirety by reference.

### TECHNICAL FIELD

The present disclosure relates to an image inspection device, an image inspection system, an image inspection method, and a program.

### BACKGROUND ART

Typically, a technique for inspecting a workpiece has been known. Examples of this technique for inspecting the workpiece include, for example, an image inspection device described in JP 2015-232485 A.

The image inspection device described in JP 2015-232485 A includes three or more pieces of illumination means for illuminating a workpiece from different illumination directions and illumination control means for lighting the three or more pieces of illumination means in a predetermined lighting order one by one or simultaneously lighting the three or more pieces of illumination means.

The image inspection device further includes imaging means for imaging a plurality of partially illuminated images with different illumination directions, by imaging the workpiece from a constant direction, at an illumination timing when the illumination control means lights each illumination means.

The image inspection device further includes template search means for acquiring a model image for each illumination pattern of which an illumination direction is changed in advance and defining a template in advance based on this, performing search with the template related to each illumination pattern, at the time of operation for inspecting an appearance of a moving workpiece, and acquiring positional information that matches the template, as preprocessing to generate a workpiece inspection image based on a photometric stereo method, using a pixel value of each pixel having a correspondence relationship, between the plurality of partially illuminated images imaged by the imaging means.

The image inspection device further includes normal vector calculation means for calculating a normal vector with respect to a surface of the workpiece of each pixel, using the pixel value for each relating pixel in each partially illuminated image, from the positional information acquired by the template search means.

### SUMMARY

In an image inspection device disclosed in JP 2015-232485 A, normal vector calculation means calculates a normal vector with respect to a surface of a workpiece of each pixel, using a pixel value of each relating pixel in each partially illuminated image, from positional information acquired by template search means. However, depending on a moving speed of the workpiece, it is necessary to widen each partially illuminated image.

For example, in a case where the workpiece is a cylindrical object and the workpiece is imaged from a front side, an end of the image (portion where inclination with respect to imaging surface is large) is hardly illuminated, and a curvature change is large, and accordingly, a matching difficulty between images is high. Therefore, it is preferable to limit an inspection region (partially illuminated image) to be positioned at an image center (substantially horizontal to imaging surface) as much as possible.

The present disclosure has been made in view of the above problem, and an exemplary object of the present disclosure is to provide a technology capable of positioning an inspection region in a plurality of images at a position close to a center of the image.

An image inspection device according to one exemplary aspect of the present disclosure is an image inspection device for performing an appearance inspection of a moving workpiece, and the image inspection device includes control means for controlling a plurality of pieces of illumination means that performs illumination from different illumination directions and causing imaging means to image the workpiece in time with an illumination timing, while sequentially irradiating the workpiece with illumination from a plurality of illumination directions, image selection means for selecting a plurality of time-series consecutive images from an image sequence imaged by the imaging means as an image set, correspondence estimation means for setting a plurality of regions to each image of the image set and estimating a correspondence between the plurality of regions in each image of the image set, feature extraction means for extracting a feature including at least a surface normal of the plurality of regions, based on the correspondence, and abnormality detection means for detecting an abnormality of the workpiece, based on the feature of the plurality of regions.

An image inspection system according to one exemplary aspect of the present disclosure is an image inspection system for performing an appearance inspection of a moving workpiece and including a plurality of pieces of illumination means for performing illumination from different illumination directions, imaging means for imaging the workpiece, control means for controlling the plurality of pieces of illumination means and causing the imaging means to image a tire surface in time with an illumination timing, while sequentially irradiating the tire with illumination from a plurality of illumination directions, image selection means for selecting a plurality of time-series consecutive images from an image sequence imaged by the imaging means as an image set, correspondence estimation means for setting a plurality of regions to each image of the image set and estimating a correspondence between the plurality of regions in each image of the image set, feature extraction means for extracting a feature including at least a surface normal of the plurality of regions, based on the correspondence, and abnormality detection means for detecting an abnormality of the workpiece, based on the feature of the plurality of regions.

An image inspection method according to one exemplary aspect of the present disclosure is an image inspection method for causing a computer to perform an appearance inspection of a moving workpiece, and the method includes controlling a plurality of pieces of illumination means that performs illumination from different illumination directions and causing imaging means to image the workpiece in time with an illumination timing, while sequentially irradiating the workpiece with illumination from a plurality of illumination directions, selecting a plurality of time-series consecutive images from an image sequence imaged by the imaging means as an image set, setting a plurality of regions to each image of the image set and estimating a correspondence between the plurality of regions in each image of the image set, extracting a feature including at least a surface normal of the plurality of regions, based on the correspondence, and detecting an abnormality of the workpiece, based on the feature of the plurality of regions.

A program according to one exemplary aspect of the present disclosure is a program for causing a computer to perform an appearance inspection of a moving workpiece and causing the computer to execute processing for controlling a plurality of pieces of illumination means that performs illumination from different illumination directions and causing imaging means to image the workpiece in time with an illumination timing, while sequentially irradiating the workpiece with illumination from a plurality of illumination directions, processing for selecting a plurality of time-series consecutive images from an image sequence imaged by the imaging means as an image set, processing for setting a plurality of regions to each image of the image set and estimating a correspondence between the plurality of regions in each image of the image set, processing for extracting a feature including at least a surface normal of the plurality of regions, based on the correspondence, and processing for detecting an abnormality of the workpiece, based on the feature of the plurality of regions.

According to one exemplary aspect of the present disclosure, an exemplary effect is obtained that an inspection region in a plurality of images can be positioned at a position close to a center of the image.

### BRIEF DESCRIPTION OF THE DRAWINGS

Fig. 1 is a block diagram illustrating a configuration of an image inspection device according to the present disclosure;
Fig. 2 is a diagram illustrating an example of arrangement of a camera with respect to a tire;
Fig. 3 is a diagram illustrating an example of an image set;
Fig. 4 is a diagram for explaining an image set created by the image inspection device according to the present disclosure;
Fig. 5 is a flowchart illustrating a flow of an image inspection method according to the present disclosure;
Fig. 6 is a block diagram illustrating the configuration of the image inspection device according to the present disclosure;
Fig. 7 is a flowchart illustrating the flow of the image inspection method according to the present disclosure;
Fig. 8 is a block diagram illustrating a configuration of an image inspection system according to the present disclosure; and
Fig. 9 is a block diagram illustrating a configuration of a computer that functions as the image inspection device according to the present disclosure.

### EXAMPLE EMBODIMENT

Hereinafter, example embodiments of the present invention will be described. However, the present invention is not limited to the following exemplary example embodiments, and various modifications can be made within a scope described in the claims. For example, example embodiments obtained by appropriately combining technologies (some or all of things or methods) adopted in the following exemplary example embodiments can also be included in the scope of the present invention. Example embodiments obtained by appropriately omitting some of the technologies adopted in the following exemplary example embodiments can also be included in the scope of the present invention. Effects mentioned in the following exemplary example embodiments are examples of effects expected in the exemplary example embodiments, and do not define extension of the present invention. That is, example embodiments that do not achieve the effects mentioned in the following exemplary example embodiments can also be included in the scope of the present invention.

### [First Exemplary Example Embodiment]

A first exemplary example embodiment that is an example of the example embodiments of the present invention will be described in detail with reference to the drawings. The present exemplary example embodiment is a basic form of each exemplary example embodiment to be described below. An application range of each technology adopted in the present exemplary example embodiment is not limited to the present exemplary example embodiment. That is, each technology adopted in the present exemplary example embodiment can also be adopted in another exemplary example embodiment included in the present disclosure within a range in which no particular technical problem occurs. Each technology illustrated in the drawings referred to for describing the present exemplary example embodiment can also be adopted in other exemplary example embodiments included in the present disclosure within a range in which no particular technical problem occurs.

### (Configuration of Image Inspection Device)

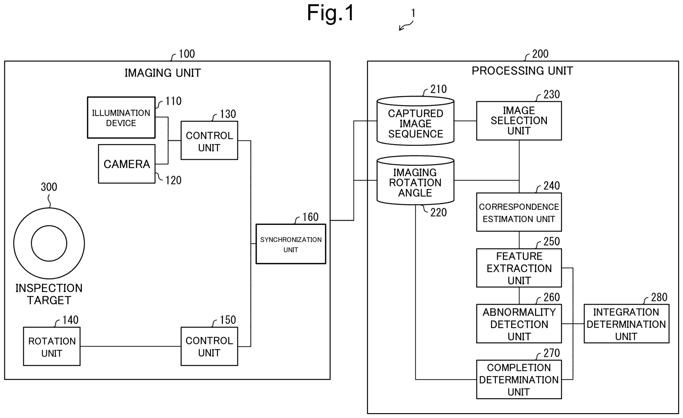

A configuration of an image inspection device 1 will be described with reference to Fig. 1. Fig. 1 is a block diagram illustrating the configuration of the image inspection device 1. As illustrated in Fig. 1, the image inspection device 1 includes an imaging unit 100 and a processing unit 200. In the present exemplary example embodiment, a case of a tire will be described as an example of a workpiece, but the present disclosure is not limited thereto.

The imaging unit 100 includes an illumination device 110, a camera 120, a control unit 130, a rotation unit 140, a control unit 150, and a synchronization unit 160. The processing unit 200 includes a captured image sequence 210, an imaging rotation angle 220, an image selection unit 230, a correspondence estimation unit 240, a feature extraction unit 250, an abnormality detection unit 260, a completion determination unit 270, and an integration determination unit 280. In Fig. 1, although a tire 300 is described in the imaging unit 100, the tire 300 may be an external configuration of the image inspection device 1.

The illumination device 110 is a configuration that achieves illumination means in the present exemplary example embodiment. The camera 120 is a configuration that achieves imaging means in the present exemplary example embodiment. The control unit 130 is a configuration that achieves control means in the present exemplary example embodiment.

The image selection unit 230 is a configuration that achieves image selection means in the present exemplary example embodiment.

The correspondence estimation unit 240 is a configuration that achieves correspondence estimation means in the present exemplary example embodiment. The feature extraction unit 250 is a configuration that achieves feature extraction means in the present exemplary example embodiment. The abnormality detection unit 260 is a configuration that achieves abnormality detection means in the present exemplary example embodiment. The completion determination unit 270 is a configuration that achieves completion determination means in the present exemplary example embodiment.

The integration determination unit 280 is a configuration that achieves integration determination means in the present exemplary example embodiment.

The illumination device 110 is a device that irradiates the tire 300 with light (illumination light) for imaging the tire 300 and includes a plurality of illumination units that performs illumination from different illumination directions. As will be described later, in order to estimate a surface normal of a tire by adopting a photometric stereo method, it is necessary for the illumination device 110 to illuminate the tire 300 from a plurality of different illumination directions, and it is preferably capable of performing illumination from three or more directions. In the present exemplary example embodiment, the number of illumination directions in which the tire 300 is illuminated is set to M (M is integer of 2 or more).

The camera 120 is arranged directly above the tire 300 and is arranged to image a tread surface of the tire 300. The camera 120 images a surface of the tire 300 illuminated by the illumination device 110 from the plurality of illumination directions. For example, in a case where the tire 300 is illuminated by the illumination device 110 from the M directions, the camera 120 images the surface of the tire 300 M times, while sequentially switching the M illumination units. A pattern for sequentially switching the M illumination units will be referred to as an illumination pattern. M images imaged by the camera 120 are referred to as an image group.

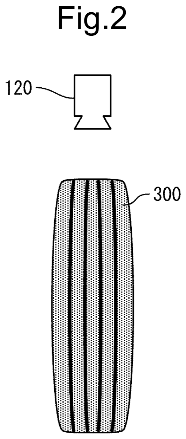

Fig. 2 is a diagram illustrating an example of arrangement of the camera 120 with respect to the tire 300. Although Fig. 2 illustrates an arrangement example of the single camera 120, two or more cameras may be provided. As illustrated in Fig. 2, the camera 120 is arranged directly above the tire 300 and is arranged to image the tread surface of the tire 300. For example, the camera 120 may be arranged obliquely above the tire 300 and simultaneously image the tread surface and a side surface.

The control unit 130 controls the plurality of illumination units (illumination device 110) that performs illumination from the different illumination directions, and causes the camera 120 to image the surface of the tire 300 in time with an illumination timing, while sequentially irradiating the tire 300 with illumination from the plurality of illumination directions.

The rotation unit 140 rotates the tire 300 about a central axis. The control unit 150 controls the rotation unit 140 and rotates/stops the tire 300. The synchronization unit 160 controls the control unit 130 and the control unit 150 in such a way as to synchronize an imaging timing of the camera 120 with the rotation of the rotation unit 140.

In the present exemplary example embodiment, regardless of the imaging timing of the camera 120, it is assumed that the rotation unit 140 rotate the tire 300 at a constant speed. However, the synchronization unit 160 may cause the rotation unit 140 to stop the rotation of the tire 300 when the camera 120 images the surface of the tire 300, and may cause the rotation unit 140 to rotate the tire 300 when the camera 120 does not image the surface of the tire 300.

The rotation unit 140 includes an encoder that measures a rotation angle of the tire 300, and the synchronization unit 160 outputs, to the processing unit 200, a rotation angle (hereinafter, also referred to as encoder information) measured by the encoder when the camera 120 images the surface of the tire 300 together with the captured image.

The processing unit 200 includes a storage device (not illustrated), receives the captured image sequence 210 imaged by the camera 120 from the imaging unit 100 and stores the captured image sequence 210 in the storage device. The processing unit 200 receives the imaging rotation angle 220 measured by the rotation unit 140, from the imaging unit 100 and stores the imaging rotation angle 220 in a storage unit in association with each image of the captured image sequence 210.

The image selection unit 230 selects a plurality of time-series consecutive images from an image sequence imaged by the camera 120, as an image set. For example, the image selection unit 230 selects the plurality of time-series consecutive images from the image sequence imaged by the camera 120 as a first image set, and replaces the oldest image among the images of the first image set with an image subsequent to the newest image among the images of the first image set and selects the images as a second image set.

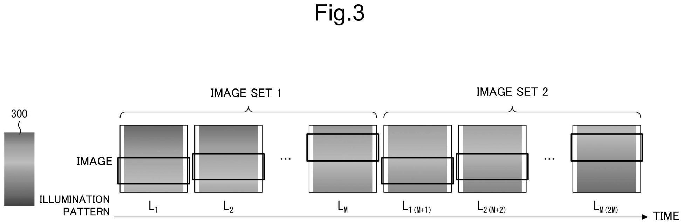

Here, the image set will be described. Fig. 3 is a diagram illustrating an example of the image set, to be compared with an image set created by the image inspection device 1 according to the present exemplary example embodiment. In Fig. 3, a case is illustrated where the surface of the tire 300 is imaged while switching M illumination patterns.

In Fig. 3, the leftmost image is the oldest image, and the rightmost image is the newest image. These images are time-series continuous images. As illustrated in Fig. 3, as an image set 1, an image group is selected to include images of all illumination patterns L₁ to L_{M}. As a next image set 2, an image group is selected to include images of all next illumination patterns L_{1 (M + 1)} to L_{M (2M)}.

In a case where the image set is created in this way, in order to perform inspection with no omission, it is necessary to widen an inspection range (rectangular region in each image illustrated in Fig. 3) for one set. As illustrated in Fig. 2, in a case where the camera 120 is arranged directly above the tire 300, an end of an image (portion where inclination with respect to imaging surface is large) is hardly illuminated, and a change in a curvature is large, and accordingly, a matching difficulty between images is high. In a case where a rotation speed of the tire 300 is high, there is a possibility that omission occurs in the inspection.

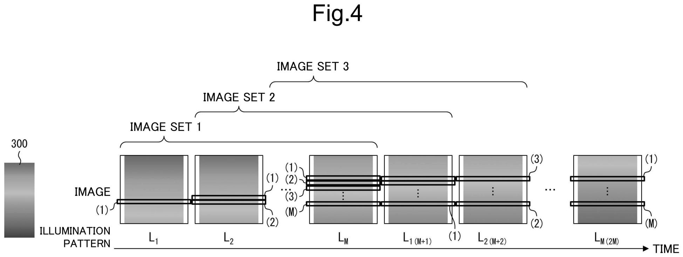

Fig. 4 is a diagram for explaining an image set created by the image inspection device 1 according to the present disclosure. In Fig. 4, the leftmost image is the oldest image, and the rightmost image is the newest image. These images are time-series continuous images.

As illustrated in Fig. 4, as an image set 1, an image group is selected to include the images of all the illumination patterns L₁ to L_{M}. As a next image set 2, an image group is selected to include images of all illumination patterns L₂ to L_{1 (M + 1)}. Similarly, as a next image set 3, an image group is selected to include images of all illumination patterns L₃ to L_{2 (M + 2)}.

As illustrated in Fig. 4, a region (1) is set to the image of the illumination pattern L₁ included in the image set 1. The region (1) and a region (2) are set to the image of the illumination pattern L₂ included in the image set 1. Similarly, the region (1) to a region (M) are set to the image of the illumination pattern L_{M} included in the image set 1. Therefore, since the region (1) related to all the illumination patterns 1 to M is included in the image set 1, it is possible to extract a feature including a surface normal of the region (1), by applying the photometric stereo method.

The regions (1) and (2) are set to the image of the illumination pattern L₂ included in the image set 2. The region (1) to a region (3) are set to the image of the illumination pattern L₃ included in the image set 2. Similarly, the regions (2) to (M) and a next different region related to the region (1) are set to the image of the illumination pattern L_{1 (M + 1)} included in the image set 2. Therefore, since the region (2) related to all the illumination patterns 1 to M is included in the image set 2, it is possible to extract a feature including a surface normal of the region (2), by applying the photometric stereo method.

Similarly, since the region (3) related to all the illumination patterns 1 to M is included in the image set 3, it is possible to extract a feature including a surface normal of the region (3), by applying the photometric stereo method. The same applies hereinafter.

In a case where the image set is created in this way, the inspection range for one set (rectangular region in each image illustrated in Fig. 4) can be narrowed. Therefore, when compared with the image set illustrated in Fig. 3, it is possible to inspect only a region close to the center of the image (portion where inclination with respect to imaging surface is small), and the change in the curvature is small, and accordingly, the matching difficulty between the images can be lowered.

When the number of illumination patterns by the plurality of illumination units is set to the integer M of 2 or more, the image selection unit 230 may select M time-series consecutive images from the image sequence imaged by the camera 120, as an image set, in such a way as to include all images of the M illumination patterns.

The correspondence estimation unit 240 sets a plurality of regions to each image in the image set and estimates a correspondence between the plurality of regions in each image in the image set. For example, the correspondence estimation unit 240 may obtain a pixel correspondence between images using a method such as feature point matching. The correspondence estimation unit 240 may estimate a moving amount from the rotation angle of the tire 300 measured by the rotation unit 140 at the time when each image is acquired.

The correspondence estimation unit 240 may set M regions to each image in the image set and estimate a correspondence between the M regions in each image in the image set.

The feature extraction unit 250 extracts the feature including at least the surface normal of the plurality of regions, based on the correspondence. For example, the feature extraction unit 250 extracts the feature including the surface normal by applying the photometric stereo method to the image of the region (1) included in all the images of the illumination patterns L₁ to L_{M}, in the image set 1 illustrated in Fig. 4.

This feature includes information such as texture (specularity, roughness, base color), in addition to the surface normal. The feature extraction unit 250 may generate an image of which a contrast of a groove (groove in tread surface) is enhanced using the photometric stereo method. In the following description, the surface normal may be referred to as normal information or a normal vector.

In a case where a certain region having the same positional relationship is included in all the M images in the image set, the feature extraction unit 250 may extract the feature including at least the surface normal of the region.

The feature extraction unit 250 may extract the feature including the surface normal by applying the photometric stereo method to the plurality of regions, based on the correspondence between the plurality of regions estimated by the correspondence estimation unit 240.

The abnormality detection unit 260 detects an abnormality on the surface of the tire 300, based on the feature of the plurality of regions. For example, the abnormality detection unit 260 detects the abnormality such as a cut in the region or a cord exposure, using at least one of a normal or an intermediate feature at the time of normal estimation.

Specifically, the abnormality detection unit 260 recognizes a shape of the tire 300 using the image imaged by the camera 120. Then, the abnormality detection unit 260 calculates an absolute dimension of the tire 300, based on the recognized shape of the tire 300 and a reference dimension of the tire 300. In particular, the abnormality detection unit 260 calculates a dimension of a defect candidate of the tire 300 (absolute dimension of defect candidate of tire 300). Here, the absolute dimension is an actual dimension (real dimension) of the tire 300.

The abnormality detection unit 260 may generate an image of which the contrast of the groove (groove in tread surface) is enhanced using the photometric stereo method. Then, the abnormality detection unit 260 may calculate how many pixels the groove corresponds to, and calculate how many millimeters one pixel corresponds to, based on information about a dimension of the groove indicated by the reference dimension. The abnormality detection unit 260 can convert the number of pixels in the image of the tire 300 into the absolute dimension of the tire 300 based on the calculated length per pixel.

The abnormality detection unit 260 determines presence or absence of the defect of the tire 300, based on the reference dimension of the tire 300, the recognized shape of the tire 300, and the calculated dimension of the tire 300.

For example, in a case of detecting a defect candidate such as a crack in the recognized shape of the tire 300, the abnormality detection unit 260 calculates an absolute dimension of the defect candidate. Then, the abnormality detection unit 260 compares the absolute dimension of the defect candidate with a threshold set for each defect type. In a case where the absolute dimension of the defect candidate is equal to or more than the threshold, the abnormality detection unit 260 determines that the defect candidate corresponds to the defect.

In a case where an error between the calculated absolute dimension of the tire 300 and the reference dimension of the tire 300 is equal to or more than a predetermined threshold, the abnormality detection unit 260 determines that the tire 300 has a defect.

The type of the defect detected by the abnormality detection unit 260 is not limited to a specific type. For example, the abnormality detection unit 260 may detect tread wear (shortage of depth of groove due to wear of tread portion), a cut flaw (cut), a crack (cracking), a through flaw (nail hole or the like), waving, curling, exposure of an internal cord (metal cord or nylon cord inside the tire), and a puncture repair mark, or part thereof, but is not limited thereto.

The completion determination unit 270 determines whether imaging of an entire region of the tire 300 is completed. For example, when the completion determination unit 270 sets the rotation angle of the tire 300 measured by the rotation unit 140 to 0 degrees at the time when the inspection of the tire 300 is started, and when the rotation angle of the tire 300 measured by the rotation unit 140 becomes 360 degrees, the completion determination unit 270 may determine that the imaging of the entire region of the tire 300 is completed.

The integration determination unit 280 determines quality of the tire 300, based on abnormality detection results of the plurality of regions. When the inspection of the entire circumference of the tire 300 is completed, the integration determination unit 280 integrates detection results of the abnormality detection unit 260 and makes final determination. For example, if there is only one portion where an abnormality is detected, the integration determination unit 280 may determine that the tire 300 is defective, or if there is a predetermined number or more portions where the abnormality is detected, the integration determination unit 280 may determine that the tire 300 is defective.

### (Effects of Image Inspection Device)

As described above, in the image inspection device 1, the correspondence estimation unit 240 sets the plurality of regions to each image in the image set and estimates the correspondence between the plurality of regions in each image in the image set. In this way, as described with reference to Fig. 4, the inspection range for one set (rectangular region in each image illustrated in Fig. 4) can be narrowed. Then, it is possible to inspect only a region close to the center of the image (portion where inclination with respect to imaging surface is small), and the change in the curvature is small, and accordingly, the matching difficulty between the images can be lowered. Therefore, it is possible to easily estimate the correspondence between the regions in the plurality of images.

The image selection unit 230 selects the plurality of time-series consecutive images from the image sequence imaged by the camera 120 as the first image set, and replaces the oldest image among the images of the first image set with the image subsequent to the newest image among the images of the first image set and selects the images as the second image set. In this way, as described with reference to Fig. 4, the inspection range for one set (rectangular region in each image illustrated in Fig. 4) can be narrowed.

When the number of illumination patterns by the plurality of illumination units is set to the integer M of 2 or more, the image selection unit 230 selects M time-series consecutive images from the image sequence imaged by the camera 120, as an image set, in such a way as to include all images of the M illumination patterns. In this way, as described with reference to Fig. 4, the inspection range for one set (rectangular region in each image illustrated in Fig. 4) can be narrowed.

The correspondence estimation unit 240 sets the M regions to each image in the image set and estimates the correspondence between the M regions in each image in the image set. Therefore, it is possible to easily estimate the correspondence between the regions in the plurality of images.

In a case where a certain region having the same positional relationship is included in all the M images in the image set, the feature extraction unit 250 extracts the feature including at least the surface normal of the region.

Therefore, the feature extraction unit 250 can easily extract the feature including the surface normal.

The feature extraction unit 250 extracts the feature including the surface normal by applying the photometric stereo method to the plurality of regions, based on the correspondence between the plurality of regions estimated by the correspondence estimation unit 240. Therefore, the feature extraction unit 250 can easily extract the feature including the surface normal.

The completion determination unit 270 determines whether imaging of the entire region of the tire 300 is completed.

Then, the integration determination unit 280 determines the quality of the tire 300, based on the abnormality detection results of the plurality of regions. Therefore, the integration determination unit 280 can make integrated determination, based on the abnormality detection results of the entire region of the tire 300.

### (Flow of Image Inspection Method)

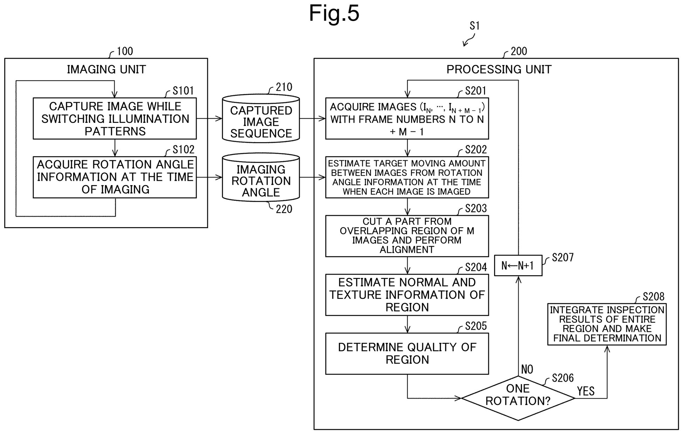

A flow of an image inspection method S1 will be described with reference to Fig. 5. Fig. 5 is a flowchart illustrating the flow of the image inspection method S1. As illustrated in Fig. 5, the image inspection method S1 includes steps S101 and S102 and steps S201 to S208.

First, the imaging unit 100 images an image of the surface of the tire 300, while switching the illumination patterns (S101). As described above, in a case where the tire 300 is illuminated by the illumination device 110 from the M directions, the camera 120 images the surface of the tire 300 M times, while sequentially switching the M illumination units. The captured image sequence 210 imaged by the camera 120 is sequentially stored in a storage unit (not illustrated).

Next, the rotation unit 140 sequentially stores the imaging rotation angle (encoder information) 220 measured by the encoder in the storage unit (S102). The processing unit 200 sequentially stores the imaging rotation angle 220 in the storage unit in association with each image of the captured image sequence 210.

The image selection unit 230 acquires images (I_{N},..., I_{N + M - 1}) with frame numbers N to N + M - 1, from among the captured image sequence 210 stored in the storage unit (not illustrated) (S201). An initial value of N is 1.

Next, the correspondence estimation unit 240 estimates a target moving amount between images from rotation angle information at the time when each image is imaged (S202). Then, the correspondence estimation unit 240 cuts a part from an overlapping region of M images and performs alignment (S203).

Next, the feature extraction unit 250 applies the photometric stereo method to the overlapping region of the M images and estimates the surface normal and texture information in the overlapping region in the M images (S204).

Next, the abnormality detection unit 260 determines quality of the tire 300 in the overlapping region, based on a feature of the overlapping region (S205). Then, the completion determination unit 270 determines whether the inspection of the entire region of the tire 300 is completed (S206). If the inspection of the entire region of the tire 300 is not completed (S206, No), N +1 is substituted for N, and the processing in and after step S201 is repeated.

If the inspection of the entire region of the tire 300 is completed (S206, Yes), the integration determination unit 280 integrates inspection results of the entire region of the tire 300 detected by the abnormality detection unit 260 and makes final determination (S208).

In a case where it is not possible for the rotation unit 140 to acquire rotation information of the tire 300, a moving amount may be estimated by feature matching between images (I_{N} and I_{N + M}) having the same illumination pattern, and a moving amount between the images in the image set may be estimated from the moving amount. It may be assumed that the tire 300 rotates at a constant speed and linear interpolation may be performed between I_{N} and I_{N + M}, and a correction amount may be adjusted by estimating acceleration/deceleration based on a difference between the moving amounts between I_{N} and I_{N + M} and I_{N + 1} and I_{N + M + 1}.

By providing a marker to the rotation unit 140 and fitting the marker within an angle of view, a rotation amount may be estimated from a marker position in each image.

The rotation speed of the tire 300 is assumed to be about 5 to 10 rpm at the maximum. When imaging is performed at 100 frame per second (fps), rotation is 30 to 60 mdeg between the images. A surface moving amount is 2.5 to 5.2 mm if a diameter of an object is 1 m. In a case where the number of images is eight and the photometric stereo method is applied, although rotation is performed by slightly less than 0.5° at the maximum for one set, a curvature change during that time is sufficiently small.

### (Effects of Image Inspection Method)

As described above, in the image inspection method S1, the correspondence estimation unit 240 estimates the target moving amount between the images from the rotation angle information at the time when each image is imaged, cuts a part from the overlapping region of the M images, and performs alignment. In this way, as described with reference to Fig. 4, the inspection range for one set (rectangular region in each image illustrated in Fig. 4) can be narrowed. Then, it is possible to inspect only a region close to the center of the image (portion where inclination with respect to imaging surface is small), and the change in the curvature is small, and accordingly, the matching difficulty between the images can be lowered. Therefore, it is possible to easily estimate the correspondence between the regions in the plurality of images.

### [Second Exemplary Example Embodiment]

A second exemplary example embodiment that is an example of the example embodiments of the present invention will be described in detail with reference to the drawings. Components having the same functions as the components described in the above-described exemplary example embodiment are denoted by the same reference signs, and the description thereof will be appropriately omitted. An application range of each technology adopted in the present exemplary example embodiment is not limited to the present exemplary example embodiment. That is, each technology adopted in the present exemplary example embodiment can also be adopted in another exemplary example embodiment included in the present disclosure within a range in which no particular technical problem occurs. Each technology illustrated in each of the drawings referred to for describing the present exemplary example embodiment can also be adopted in another exemplary example embodiment included in the present disclosure within a range in which no particular technical problem occurs.

### (Configuration of Image Inspection Device)

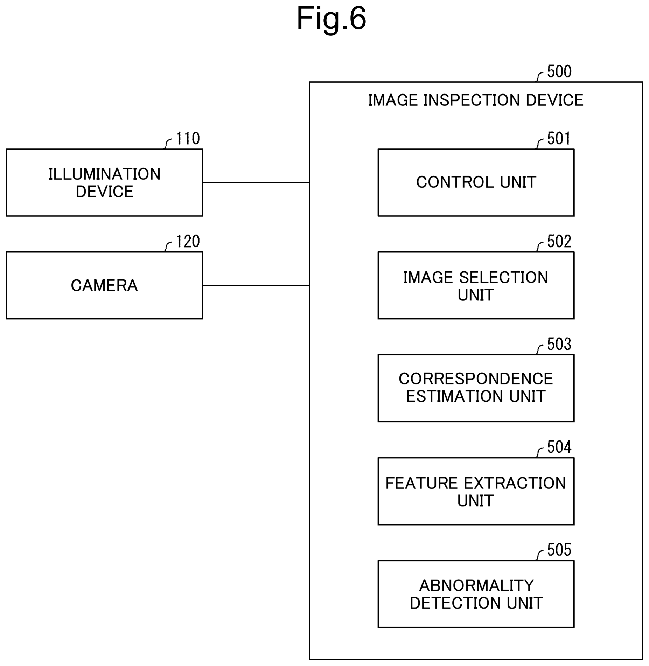

A configuration of an image inspection device 500 will be described with reference to Fig. 6. Fig. 6 is a block diagram illustrating the configuration of the image inspection device 500. As illustrated in Fig. 6, the image inspection device 500 includes a control unit 501, an image selection unit 502, a correspondence estimation unit 503, a feature extraction unit 504, and an abnormality detection unit 505.

The control unit 501 controls a plurality of illumination units (illumination device 110) that performs illumination from different illumination directions, and causes a camera 120 to image a surface of a tire 300 in time with an illumination timing, while sequentially irradiating the tire 300 with illumination from a plurality of illumination directions.

The image selection unit 502 selects a plurality of time-series consecutive images from an image sequence imaged by the camera 120, as an image set. For example, the image selection unit 502 selects the plurality of time-series consecutive images from the image sequence imaged by the camera 120 as a first image set, and replaces the oldest image among the images of the first image set with an image subsequent to the newest image among the images of the first image set and selects the images as a second image set.

The correspondence estimation unit 503 sets a plurality of regions to each image in the image set and estimates a correspondence between the plurality of regions in each image in the image set. For example, the correspondence estimation unit 503 may obtain pixel correspondence between images using a method such as feature point matching. The correspondence estimation unit 503 may estimate a moving amount from a rotation angle of the tire 300 measured by the rotation unit 140 at the time when each image is acquired.

The feature extraction unit 504 extracts a feature including at least a surface normal of the plurality of regions, based on the correspondence. For example, the feature extraction unit 504 extracts the feature including the surface normal by applying a photometric stereo method to an image of a region (1) included in all images of illumination patterns L₁ to L_{M}, in an image set 1 illustrated in Fig. 4.

The abnormality detection unit 505 detects an abnormality on the surface of the tire 300, based on the feature of the plurality of regions. For example, the abnormality detection unit 505 detects the abnormality such as a cut in the region or a cord exposure, using at least one of a normal or an intermediate feature at the time of normal estimation.

### (Effects of Image Inspection Device)

As described above, in the image inspection device 500, the correspondence estimation unit 503 sets the plurality of regions to each image in the image set and estimates the correspondence between the plurality of regions in each image in the image set. In this way, as described with reference to Fig. 4, the inspection range for one set (rectangular region in each image illustrated in Fig. 4) can be narrowed. Then, it is possible to inspect only a region close to the center of the image (portion where inclination with respect to imaging surface is small), and the change in the curvature is small, and accordingly, the matching difficulty between the images can be lowered. Therefore, it is possible to easily estimate the correspondence between the regions in the plurality of images.

### (Flow of Image Inspection Method)

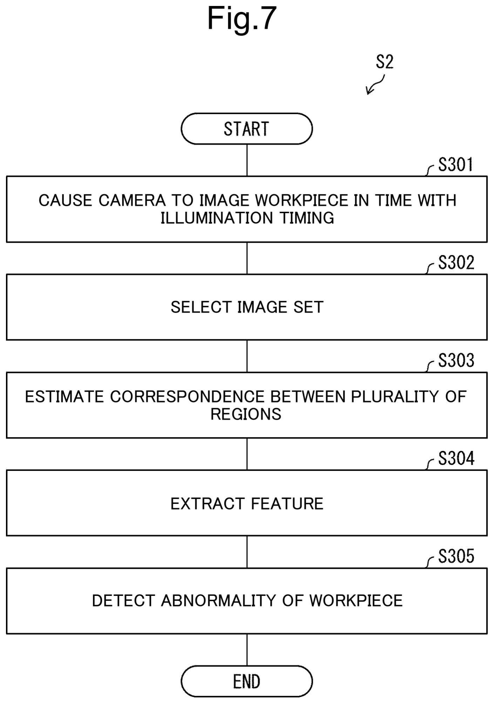

A flow of an image inspection method S2 will be described with reference to Fig. 7. Fig. 7 is a flowchart illustrating the flow of the image inspection method S2. As illustrated in Fig. 7, the image inspection method S2 includes steps S301 to S305.

First, the control unit 501 controls the plurality of illumination units (illumination device 110) that performs illumination from the different illumination directions, and causes the camera 120 to image the surface of the tire 300 in time with the illumination timing, while sequentially irradiating the tire 300 with illumination from the plurality of illumination directions (S301).

Next, the image selection unit 502 selects the plurality of time-series consecutive images from the image sequence imaged by the camera 120, as an image set (S302). For example, the image selection unit 502 selects the plurality of time-series consecutive images from the image sequence imaged by the camera 120 as a first image set, and replaces the oldest image among the images of the first image set with an image subsequent to the newest image among the images of the first image set and selects the images as a second image set.

Next, the correspondence estimation unit 503 sets the plurality of regions to each image in the image set and estimates the correspondence between the plurality of regions in each image in the image set (S303). For example, the correspondence estimation unit 503 may obtain pixel correspondence between images using a method such as feature point matching. The correspondence estimation unit 503 may estimate a moving amount from a rotation angle of the tire 300 measured by the rotation unit 140 at the time when each image is acquired.

Next, the feature extraction unit 504 extracts the feature including at least the surface normal of the plurality of regions, based on the correspondence (S304). For example, the feature extraction unit 504 extracts the feature including the surface normal by applying a photometric stereo method to an image of a region (1) included in all images of illumination patterns L₁ to L_{M}, in an image set 1 illustrated in Fig. 4.

Finally, the abnormality detection unit 505 detects the abnormality on the surface of the tire 300, based on the feature of the plurality of regions (S305). For example, the abnormality detection unit 505 detects the abnormality such as a cut in the region or a cord exposure, using at least one of a normal or an intermediate feature at the time of normal estimation.

### (Effects of Image Inspection Method)

As described above, in the image inspection method S2, the correspondence estimation unit 503 sets the plurality of regions to each image in the image set and estimates the correspondence between the plurality of regions in each image in the image set. In this way, as described with reference to Fig. 4, the inspection range for one set (rectangular region in each image illustrated in Fig. 4) can be narrowed. Then, it is possible to inspect only a region close to the center of the image (portion where inclination with respect to imaging surface is small), and the change in the curvature is small, and accordingly, the matching difficulty between the images can be lowered. Therefore, it is possible to easily estimate the correspondence between the regions in the plurality of images.

### (Configuration of Image Inspection System)

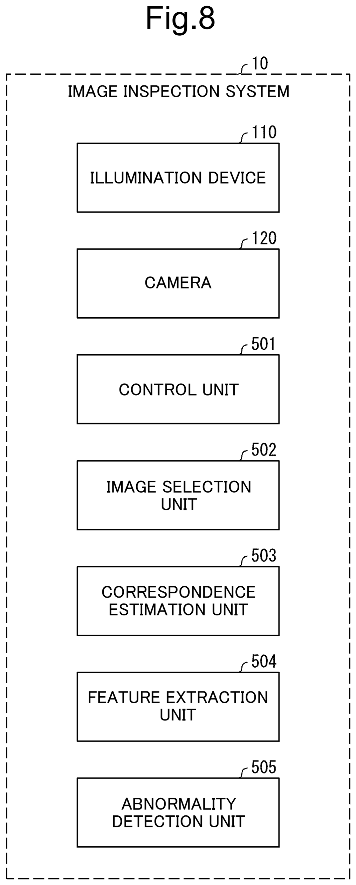

A configuration of an image inspection system 10 will be described with reference to Fig. 8. Fig. 8 is a block diagram illustrating the configuration of the image inspection system 10. As illustrated in Fig. 8, the image inspection system 10 includes the illumination device 110, the camera 120, the control unit 501, the image selection unit 502, the correspondence estimation unit 503, the feature extraction unit 504, and the abnormality detection unit 505.

Each function of the image inspection system 10 may be implemented on a cloud. For example, the illumination device 110, the camera 120, and the control unit 501 may be a single device, and the image selection unit 502, the correspondence estimation unit 503, the feature extraction unit 504, and the abnormality detection unit 505 may be a single device. These may be implemented in a single device or may be implemented in separate devices. For example, in a case where these are implemented in the separate devices, information of each unit is transmitted/received via a network, and the processing proceeds.

The control unit 501 controls a plurality of illumination units (illumination device 110) that performs illumination from different illumination directions, and causes a camera 120 to image a surface of a tire 300 in time with an illumination timing, while sequentially irradiating the tire 300 with illumination from a plurality of illumination directions.

The image selection unit 502 selects a plurality of time-series consecutive images from an image sequence imaged by the camera 120, as an image set. For example, the image selection unit 502 selects the plurality of time-series consecutive images from the image sequence imaged by the camera 120 as a first image set, and replaces the oldest image among the images of the first image set with an image subsequent to the newest image among the images of the first image set and selects the images as a second image set.

The correspondence estimation unit 503 sets a plurality of regions to each image in the image set and estimates a correspondence between the plurality of regions in each image in the image set. For example, the correspondence estimation unit 503 may obtain pixel correspondence between images using a method such as feature point matching. The correspondence estimation unit 503 may estimate a moving amount from a rotation angle of the tire 300 measured by the rotation unit 140 at the time when each image is acquired.

The feature extraction unit 504 extracts a feature including at least a surface normal of the plurality of regions, based on the correspondence. For example, the feature extraction unit 504 extracts the feature including the surface normal by applying a photometric stereo method to an image of a region (1) included in all images of illumination patterns L₁ to L_{M}, in an image set 1 illustrated in Fig. 4.

The abnormality detection unit 505 detects an abnormality on the surface of the tire 300, based on the feature of the plurality of regions. For example, the abnormality detection unit 505 detects the abnormality such as a cut in the region or a cord exposure, using at least one of a normal or an intermediate feature at the time of normal estimation.

### (Effects of Image Inspection System)

As described above, in the image inspection system 10, the correspondence estimation unit 503 sets the plurality of regions to each image in the image set and estimates the correspondence between the plurality of regions in each image in the image set. In this way, as described with reference to Fig. 4, the inspection range for one set (rectangular region in each image illustrated in Fig. 4) can be narrowed. Then, it is possible to inspect only a region close to the center of the image (portion where inclination with respect to imaging surface is small), and the change in the curvature is small, and accordingly, the matching difficulty between the images can be lowered. Therefore, it is possible to easily estimate the correspondence between the regions in the plurality of images.

### [Implementation Example by Software]

Some or all of the functions of the image inspection devices 1 and 500 (hereinafter, also referred to as "each of the above devices") may be achieved by hardware such as an Integrated Circuit (IC chip) or may be achieved by software.

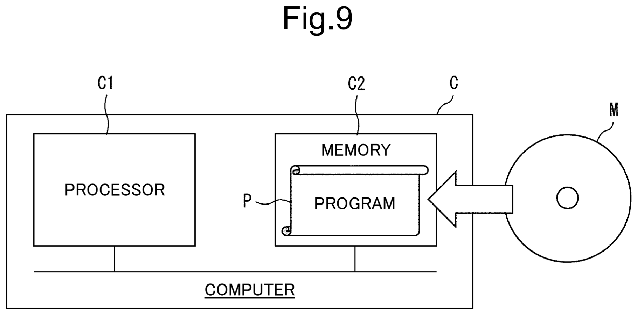

In the latter case, each of the above devices is implemented by, for example, a computer that executes commands of a program, that is software for implementing each function. Fig. 9 illustrates an example of such a computer (hereinafter, referred to as computer C). Fig. 9 is a block diagram illustrating a hardware configuration of the computer C that functions as each of the above devices.

The computer C includes at least one processor C1 and at least one memory C2. A program P for causing the computer C to operate as each of the above devices is recorded in the memory C2. In the computer C, by the processor C1 reading the program P from the memory C2 and executing the program P, each function of each of the above devices is achieved.

Available examples of the processor C1 include a Central Processing Unit (CPU), a Graphic Processing Unit (GPU), a Digital Signal Processor (DSP), a Micro Processing Unit (MPU), a Floating point number Processing Unit (FPU), a Physics Processing Unit (PPU), a Tensor Processing Unit (TPU), a quantum processor, a microcontroller, or a combination thereof. Available examples of the memory C2 include a flash memory, a Hard Disk Drive (HDD), a Solid State Drive (SSD), or a combination thereof.

The computer C may further include a Random Access Memory (RAM) for expanding the program P at the time of execution and temporarily storing various types of data. The computer C may further include a communication interface for transmitting and receiving data to and from another device. The computer C may further include an input/output interface for connecting input/output equipment such as a keyboard, a mouse, a display, or a printer.

The program P can be recorded on a non-transitory tangible recording medium M readable by the computer C. As such a recording medium M, for example, a tape, a disk, a card, a semiconductor memory, a programmable logic circuit, or the like can be used.

The computer C can acquire the program P via such a recording medium M. The program P can be transmitted via a transmission medium. As such a transmission medium, for example, a communication network, a broadcast wave, or the like can be used. The computer C can also acquire the program P via such a transmission medium.

Each of the above functions of each of the above devices may be achieved by a single processor provided in a single computer, may be achieved in cooperation with a plurality of processors provided in a single computer, or may be achieved in cooperation with a plurality of processors respectively provided in a plurality of computers. The program for causing each of the above devices to achieve each of the above functions may be stored in a single memory provided in a single computer, may be stored in a distributed manner in a plurality of memories provided in a single computer, or may be stored in a distributed manner in a plurality of memories respectively provided in a plurality of computers.

### [Supplementary Matter 1]

The present disclosure includes the technologies described in the following Supplementary Notes. However, the present invention is not limited to the technologies described in the following Supplementary Notes, and various modifications can be made within the scope described in the claims.

### (Supplementary Note 1)

An image inspection device for performing an appearance inspection of a moving workpiece, including:
control means for controlling a plurality of pieces of illumination means that performs illumination from different illumination directions and causing imaging means to image the workpiece in time with an illumination timing, while sequentially irradiating the workpiece with illumination from a plurality of illumination directions;
image selection means for selecting a plurality of time-series consecutive images from an image sequence imaged by the imaging means as an image set;
correspondence estimation means for setting a plurality of regions to each image of the image set and estimating a correspondence between the plurality of regions in each image of the image set;
feature extraction means for extracting a feature including at least a surface normal of the plurality of regions, based on the correspondence; and
abnormality detection means for detecting an abnormality of the workpiece, based on the feature of the plurality of regions.

### (Supplementary Note 2)

The image inspection device according to supplementary note 1, in which the image selection means selects a plurality of time-series consecutive images from the image sequence imaged by the imaging means as a first image set and replaces an oldest image among the images of the first image set with an image subsequent to a newest image among the images of the first image set and selects the images as a second image set.

### (Supplementary Note 3)

The image inspection device according to supplementary note 1 or 2, in which
the number of illumination patterns by the plurality of pieces of illumination means is set to an integer M of 2 or more, and
the image selection means selects M time-series consecutive images from the image sequence imaged by the imaging means as an image set, in such a way as to include all images of the M illumination patterns.

### (Supplementary Note 4)

The image inspection device according to supplementary note 3, in which the correspondence estimation means sets the M regions to each image of the image set and estimates a correspondence of the M regions in each image of the image set.

### (Supplementary Note 5)

The image inspection device according to supplementary note 4, in which in a case where a region having a same positional relationship is included in all the M images of the image set, the feature extraction means extracts the feature including at least the surface normal of the region.

### (Supplementary Note 6)

The image inspection device according to any one of supplementary notes 1 to 5, in which the feature extraction means applies a photometric stereo method to the plurality of regions, based on the correspondence between the plurality of regions estimated by the correspondence estimation means and extracts the feature including the surface normal.

### (Supplementary Note 7)

The image inspection device according to any one of supplementary notes 1 to 6, further including:
completion determination means for determining whether imaging of an entire region of the workpiece is completed; and
integration determination means for determining quality of the workpiece, based on abnormality detection results of the plurality of regions.

### (Supplementary Note 8)

An image inspection system for performing an appearance inspection of a moving workpiece, including:
a plurality of pieces of illumination means for performing illumination from different illumination directions;
imaging means for imaging the workpiece;
control means for controlling the plurality of pieces of illumination means and causing the imaging means to image the workpiece in time with an illumination timing, while sequentially irradiating the workpiece with illumination from a plurality of illumination directions;
image selection means for selecting a plurality of time-series consecutive images from an image sequence imaged by the imaging means as an image set;
correspondence estimation means for setting a plurality of regions to each image of the image set and estimating a correspondence between the plurality of regions in each image of the image set;
feature extraction means for extracting a feature including at least a surface normal of the plurality of regions, based on the correspondence; and
abnormality detection means for detecting an abnormality of the workpiece, based on the feature of the plurality of regions.

### (Supplementary Note 9)

An image inspection method for causing a computer to perform an appearance inspection of a moving workpiece, the method including:
controlling a plurality of pieces of illumination means that performs illumination from different illumination directions and causing imaging means to image the workpiece in time with an illumination timing, while sequentially irradiating the workpiece with illumination from a plurality of illumination directions;
selecting a plurality of time-series consecutive images from an image sequence imaged by the imaging means as an image set;
setting a plurality of regions to each image of the image set and estimating a correspondence between the plurality of regions in each image of the image set;
extracting a feature including at least a surface normal of the plurality of regions, based on the correspondence; and
detecting an abnormality of the workpiece, based on the feature of the plurality of regions.

### (Supplementary Note 10)

A program for causing a computer to perform an appearance inspection of a moving workpiece and causing the computer to execute:
processing for controlling a plurality of pieces of illumination means that performs illumination from different illumination directions and causing imaging means to image the workpiece in time with an illumination timing, while sequentially irradiating the workpiece with illumination from a plurality of illumination directions;
processing for selecting a plurality of time-series consecutive images from an image sequence imaged by the imaging means as an image set;
processing for setting a plurality of regions to each image of the image set and estimating a correspondence between the plurality of regions in each image of the image set;
processing for extracting a feature including at least a surface normal of the plurality of regions, based on the correspondence; and
processing for detecting an abnormality of the workpiece, based on the feature of the plurality of regions.

## Claims

1. An image inspection device for performing an appearance inspection of a moving workpiece, comprising:
control means for controlling a plurality of pieces of illumination means that performs illumination from different illumination directions and causing imaging means to image the workpiece in time with an illumination timing, while sequentially irradiating the workpiece with illumination from a plurality of illumination directions;
image selection means for selecting a plurality of time-series consecutive images from an image sequence imaged by the imaging means as an image set;
correspondence estimation means for setting a plurality of regions to each image of the image set and estimating a correspondence between the plurality of regions in each image of the image set;
feature extraction means for extracting a feature including at least a surface normal of the plurality of regions, based on the correspondence; and
abnormality detection means for detecting an abnormality of the workpiece, based on the feature of the plurality of regions.

2. The image inspection device according to claim 1, wherein the image selection means selects a plurality of time-series consecutive images from the image sequence imaged by the imaging means as a first image set and replaces an oldest image among the images of the first image set with an image subsequent to a newest image among the images of the first image set and selects the images as a second image set.

3. The image inspection device according to claim 1 or 2, wherein
the number of illumination patterns by the plurality of pieces of illumination means is set to an integer M of 2 or more, and
the image selection means selects M time-series consecutive images from the image sequence imaged by the imaging means as an image set, in such a way as to include all images of the M illumination patterns.

4. The image inspection device according to claim 3, wherein the correspondence estimation means sets the M regions to each image of the image set and estimates a correspondence of the M regions in each image of the image set.

5. The image inspection device according to claim 4, wherein in a case where a region having a same positional relationship is included in all the M images of the image set, the feature extraction means extracts the feature including at least the surface normal of the region.

6. The image inspection device according to claim 1 or 2, wherein the feature extraction means applies a photometric stereo method to the plurality of regions, based on the correspondence between the plurality of regions estimated by the correspondence estimation means and extracts the feature including the surface normal.

7. The image inspection device according to claim 1 or 2, further comprising:
completion determination means for determining whether imaging of an entire region of the workpiece is completed; and
integration determination means for determining quality of the workpiece, based on abnormality detection results of the plurality of regions.

8. An image inspection method for causing a computer to perform an appearance inspection of a moving workpiece, the method comprising:
controlling a plurality of pieces of illumination means that performs illumination from different illumination directions and causing imaging means to image the workpiece in time with an illumination timing, while sequentially irradiating the workpiece with illumination from a plurality of illumination directions;
selecting a plurality of time-series consecutive images from an image sequence imaged by the imaging means as an image set;
setting a plurality of regions to each image of the image set and estimating a correspondence between the plurality of regions in each image of the image set;
extracting a feature including at least a surface normal of the plurality of regions, based on the correspondence; and
detecting an abnormality of the workpiece, based on the feature of the plurality of regions.

9. A program for causing a computer to perform an appearance inspection of a moving workpiece and causing the computer to execute:
processing for controlling a plurality of pieces of illumination means that performs illumination from different illumination directions and causing imaging means to image the workpiece in time with an illumination timing, while sequentially irradiating the workpiece with illumination from a plurality of illumination directions;
processing for selecting a plurality of time-series consecutive images from an image sequence imaged by the imaging means as an image set;
processing for setting a plurality of regions to each image of the image set and estimating a correspondence between the plurality of regions in each image of the image set;
processing for extracting a feature including at least a surface normal of the plurality of regions, based on the correspondence; and
processing for detecting an abnormality of the workpiece, based on the feature of the plurality of regions.
